# FASCICULE DE BREVET EUROPEEN

(11) **EP 2 441 674 B1**
(45) Date de publication et mention de la délivrance du brevet: **30.09.2015**
(21) Numéro de dépôt: 11306333.3
(22) Date de dépôt: 14.10.2011
(51) Int. Cl.: B64D 29/02, B64D 33/02

(54) **Nacelle d'aéronef incorporant un cadre arrière incliné vers l'arrière**
Luftfahrzeuggondel, die einen nach hinten geneigten rückwärtigen Rahmen umfasst
Aircraft nacelle including a rear frame tilted towards the rear

(30) Priorité: 15.10.2010 FR 1058428
(43) Date de publication de la demande: 18.04.2012
(73) Titulaire: Airbus Opérations SAS, 31060 Toulouse (FR)
(72) Inventeur: Porte, Alain, 31770 Colomiers (FR); Lalane, Jacques, 31650 Saint Orens de Gameville (FR); ChelinN, Frédéric, 32430 Encausse (FR)
(74) Mandataire: Fantin, Laurent

(56) Documents cités:
- EP-A2- 0 436 243
- EP-A2- 0 939 028
- GB-A- 1 197 711
- GB-A- 2 273 131
- US-A- 3 571 977

## Description

La présente invention se rapporte à une nacelle d'aéronef incorporant un cadre arrière incliné

Un ensemble propulsif d'aéronef comprend une nacelle dans laquelle est disposée de manière sensiblement concentrique une motorisation.

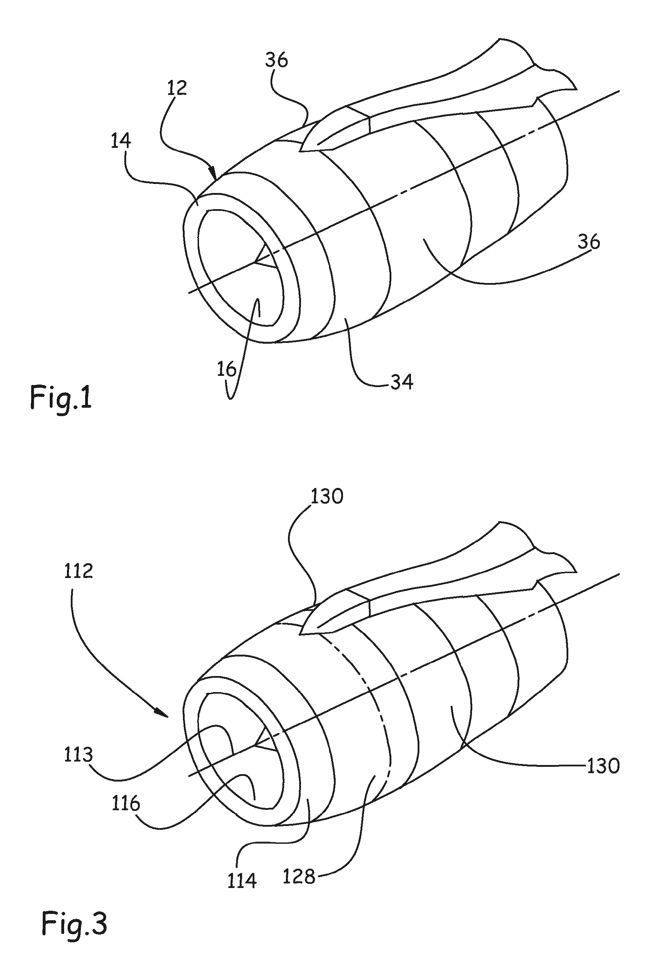

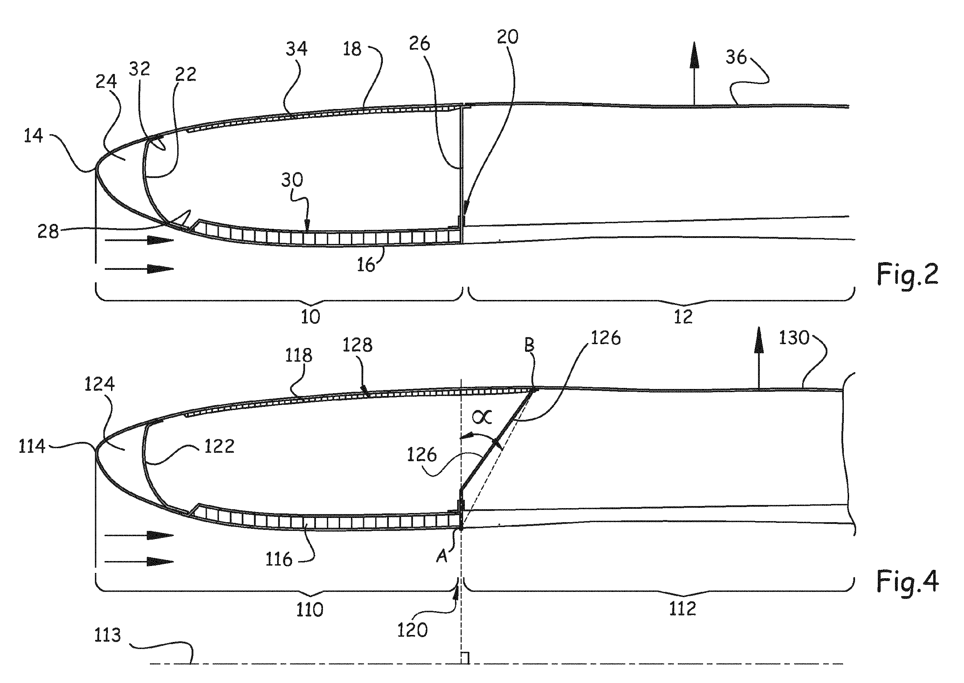

Comme illustré sur les figures 1 et 2, la nacelle comprend à l'avant une entrée d'air 10 permettant de canaliser un flux d'air en direction de la motorisation 12, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation.

L'entrée d'air 10 comprend une lèvre 14 dont la surface en contact avec les flux aérodynamiques est prolongée à l'intérieur de la nacelle par une paroi intérieure 16 délimitant un conduit et à l'extérieur de la nacelle par une paroi extérieure 18.

L'entrée d'air 10 est reliée à la motorisation 12 au niveau d'une zone de jonction 20 par tous moyens appropriés. La zone de jonction 20 est sensiblement plane et perpendiculaire à l'axe longitudinal de la nacelle.

Sur le plan structurel, l'entrée d'air 10 comprend un premier cadre dit cadre avant 22 reliant la paroi intérieure 16 et la paroi extérieure 18 délimitant avec la lèvre 14 un conduit annulaire 24 et un second cadre dit cadre arrière 26 reliant la paroi intérieure 16 et la paroi extérieure 18 à proximité de la surface de jonction 20 de la motorisation.

Ces cadres peuvent comprendre chacun au moins une ouverture pour permettre le passage d'un conduit prévu pour alimenter en air chaud un système de traitement du givre au niveau de la lèvre.

Selon un mode de réalisation, le cadre avant 22 comprend au niveau de la paroi intérieure un bord 28 recourbé vers l'arrière de la nacelle contre lequel sont plaqués un bord d'un panneau formant la lèvre 14 et un bord d'un autre panneau 30 formant la paroi intérieure 16, lesdits bords étant mis bout à bout. Avantageusement, le panneau 30 assure un traitement acoustique et comprend une structure alvéolaire lui conférant une certaine rigidité.

En complément, le cadre avant 22 comprend au niveau de la paroi extérieure 18 un bord 32 recourbé vers l'arrière de la nacelle contre lequel est plaquée au moins une partie du panneau formant la lèvre. Selon un mode de réalisation illustré sur la figure 2, la paroi extérieure 18 est formée par un panneau 34 indépendant du panneau formant la lèvre 14. Dans ce cas, les bords adjacents du panneau 34 et du panneau formant la lèvre 14 sont mis bout à bout et plaqués contre le bord recourbé 32. Le panneau formant la lèvre 14 est généralement métallique pour être compatible avec un système pour traiter le givre ou la glace utilisant de l'air chaud prévu au niveau de l'entrée d'air et le panneau 34 en matériau composite pour réduire la masse embarquée.

Concernant le cadre arrière, ce dernier assure la reprise des efforts de flexion, de rotation ou autres qui s'appliquent sur l'entrée d'air tels que par exemple, le poids de l'entrée d'air, les efforts induits par les écoulements aérodynamiques. Ce cadre arrière 26 est disposé dans un plan sensiblement perpendiculaire à la direction longitudinale de la nacelle.

Un cadre arrière est notamment décrit dans le document FR-2.904.604.

Selon ce document, le cadre arrière comprend au niveau de son plus petit diamètre un rebord contre lequel peut prendre appui la paroi intérieure fixée audit rebord par tous moyens appropriés. Le cadre arrière est relié à la paroi extérieure par l'intermédiaire d'une pièce intercalaire périphérique avec une section en T, ledit cadre étant relié au niveau du pied de la pièce intercalaire en T, la tête du T servant d'appui à la paroi extérieure.

La paroi extérieure de la nacelle s'étend depuis l'entrée d'air jusqu'à la sortie arrière. Elle est constituée de plusieurs éléments juxtaposés, une lèvre 14 sensiblement rigide à l'avant, puis des panneaux fixes 34 entre le cadre avant et le cadre arrière, suivie d'éléments mobiles tels que des capots 36 également appelés portes.

La lèvre 14 et les panneaux fixes 34 sont rigides en raison des formes courbes et/ou des nombreux renforts pour résister aux efforts générés par les écoulements aérodynamiques ou aux éventuels chocs.

Les capots sont rendus mobiles pour autoriser l'accès à la motorisation placée à l'intérieur de la nacelle. Ces capots sont articulés au reste de la nacelle de différentes manières en fonction de la cinématique retenue et s'étendent depuis le haut de la nacelle, à proximité de l'ancrage du mât, jusqu'au bas de la nacelle et ont une forme demi-cylindrique.

En complément des capots, la nacelle doit comprendre des cadres pour recevoir la périphérie des capots en position fermée, des moyens pour positionner, verrouiller, manoeuvrer les capots. Tous ces éléments inhérents aux éléments mobiles tendent à augmenter la masse embarquée.

Aussi, la présente invention propose une alternative qui permet de réduire la masse embarquée.

A cet effet, l'invention a pour objet une nacelle d'aéronef selon la revendication 1.

D'autres caractéristiques et avantages ressortiront de la description qui va suivre de l'invention, description donnée à titre d'exemple uniquement, en regard des dessins annexés sur lesquels :
- La figure 1 est une vue en perspective d'une nacelle d'aéronef selon l'art antérieur,
- La figure 2 est une coupe selon un plan longitudinal de l'avant d'une nacelle d'aéronef selon l'art antérieur,
- La figure 3 est une vue en perspective d'une nacelle d'aéronef selon l'invention,
- La figure 4 est une coupe selon un plan longitudinal de l'avant d'une nacelle d'aéronef selon l'invention,
- La figure 5 est une coupe illustrant en détails un cadre arrière selon une variante de l'invention,
- La figure 6 est une coupe illustrant en détails un cadre arrière selon une autre variante de l'invention,
- Les figures 7A à 7C sont des représentations schématiques de trois variantes du cadre arrière selon l'invention.

Sur les figures 3 et 4, on a représenté une nacelle d'aéronef comportant à l'avant une entrée d'air 110 permettant de canaliser un flux d'air en direction d'une motorisation 112. Pour la suite de la description, l'axe longitudinal 113 de la nacelle correspond à l'axe de rotation de la motorisation. L'avant de la nacelle correspond à l'endroit où le flux pénètre à l'intérieur de la nacelle et l'arrière de la nacelle correspond à l'endroit où le flux sort de la nacelle.

L'entrée d'air 110 comprend une lèvre 114 dont la surface en contact avec les flux aérodynamiques est prolongée à l'intérieur de la nacelle par une paroi intérieure 116 délimitant un conduit et à l'extérieur de la nacelle par une paroi extérieure 118.

La paroi intérieure 116 et la paroi extérieure 118 de l'entrée d'air sont reliées au niveau d'une zone de jonction 120 à la motorisation 112.

Sur le plan structurel, l'entrée d'air 110 comprend un premier cadre dit cadre avant 122 reliant la paroi intérieure 116 et la paroi extérieure 118 délimitant avec la lèvre 114 un conduit annulaire 124 et un second cadre dit cadre arrière 126 reliant la paroi intérieure 116 et la paroi extérieure 118 à proximité de la zone de jonction 120.

La lèvre 114, le conduit intérieur 116 et le cadre avant 122 ne sont pas plus décrits car ils sont connus de l'homme du métier.

Le cadre arrière 126 assure la reprise des efforts de flexion, de rotation ou autre qui s'appliquent sur l'entrée d'air tels que par exemple, le poids de l'entrée d'air, les efforts induits par les écoulements aérodynamiques.

Un cadre arrière est notamment décrit dans le document FR-2.904.604.

Il peut comprendre un ou plusieurs anneaux concentriques et/ou un ou plusieurs secteurs angulaires.

Il est relié par tous moyens appropriés au conduit intérieur 116, notamment au niveau de la zone de jonction 120 entre le conduit intérieur 116 et le conduit de la motorisation 112.

La paroi extérieure de la nacelle s'étend depuis l'entrée d'air jusqu'à la sortie arrière. Elle est constituée par la juxtaposition de plusieurs éléments, une lèvre 114 sensiblement rigide à l'avant, puis des panneaux fixes 128 entre le cadre avant 122 et le cadre arrière 126, suivie d'éléments mobiles tels que des capots 130 également appelés portes.

Avantageusement, les panneaux fixes 128 sont réalisés en matériau composite et peuvent comprendre des éléments de renforts. Ils sont reliés par des moyens de liaison au reste de la nacelle au niveau du cadre avant et du cadre arrière.

Les capots 130 sont rendus mobiles pour autoriser l'accès à la motorisation 112 placée à l'intérieur de la nacelle. Ces capots 130 sont articulés au reste de la nacelle de différentes manières en fonction de la cinématique retenue et s'étendent depuis le haut de la nacelle, à proximité de l'ancrage du mât, jusqu'au bas de la nacelle et ont une forme demi-cylindrique.

Les panneaux fixes 128 et les capots 130 ne sont pas plus décrits car ils peuvent prendre différentes configurations.

Par construction géométrique, pour une section donnée selon un plan contenant la l'axe longitudinal de la nacelle, on appelle le point A le point d'intersection entre le cadre arrière 126 et la paroi intérieure 116 et le point B le point d'intersection entre le cadre arrière 126 et la paroi extérieure 118. Plus précisément, le point A est disposé au niveau de la surface de la paroi intérieure en contact avec les flux aérodynamiques et correspond à l'intersection de cette surface avec la direction du cadre arrière à proximité de la paroi intérieure. De la même manière, le point B est disposé au niveau de la surface de la paroi extérieure en contact avec les flux aérodynamiques et correspond à l'intersection de cette surface avec la direction du cadre arrière à proximité de la paroi extérieure. Selon l'invention, sur plus de 50% de la circonférence du cadre arrière, le point B est décalé vers l'arrière de la nacelle par rapport au point A. Cette configuration permet de réduire les dimensions des éléments mobiles ou capots 130 et d'augmenter les dimensions des panneaux fixes 128 ce qui tend à réduire la masse embarquée.

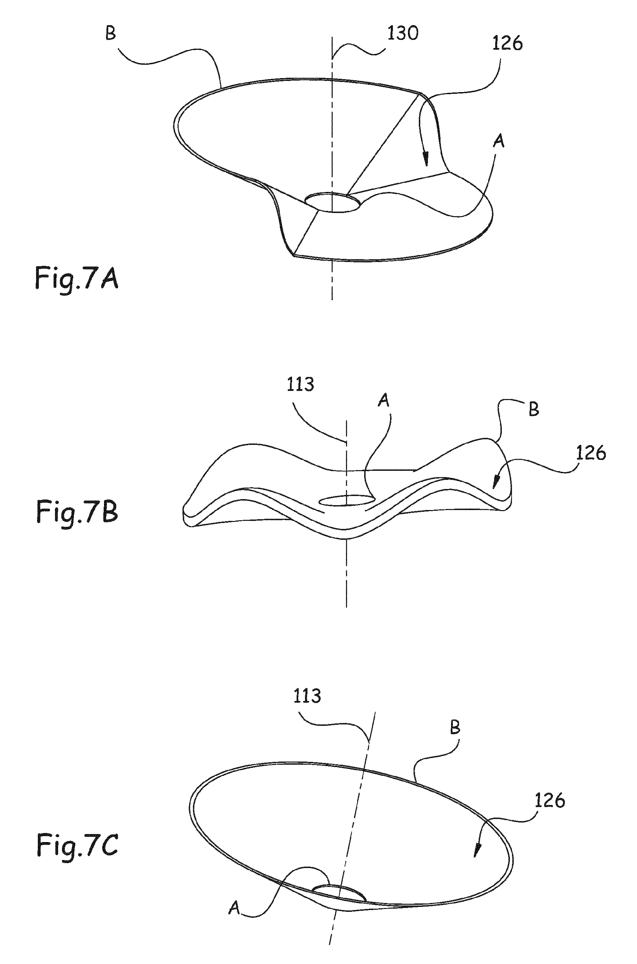

Avantageusement, le point B est décalé vers l'arrière sur toute la circonférence du cadre arrière, comme illustré sur la figure 7C. Ainsi, la périphérie extérieure du cadre arrière est décalée vers l'arrière par rapport à la périphérie intérieure. Selon une autre variante illustrée sur la figure 7A, le point B est décalé vers l'arrière par rapport au point A au niveau d'un secteur angulaire.

Selon une autre variante illustrée sur la figure 7B, le point B est décalé vers l'arrière par rapport au point A au niveau de certaines sections. Dans ce cas, le cadre arrière peut avoir un profil ondulé le long d'un cercle de centre l'axe longitudinal 113 et intercalé entre les points A et B.

De préférence, la droite AB forme un angle a compris entre 20 et 45° par rapport à la droite passant par A perpendiculaire à l'axe longitudinal 113, comme illustré sur la figure 4. Cette configuration permet de limiter également les déformations de la nacelle.

Avantageusement, les moyens de liaison du ou des panneaux fixes 128 sont démontables pour permettre l'accès à la zone de jonction entre le conduit intérieur 116 et le conduit de la motorisation.

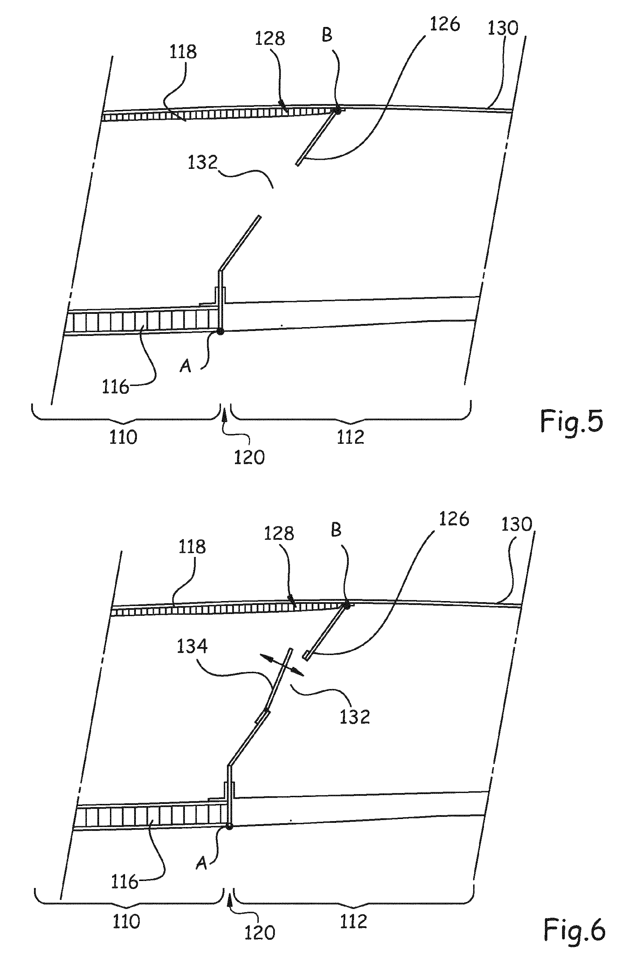

Selon un mode de réalisation préféré illustré sur la figure 5, le cadre arrière 126 comprend au moins une ouverture 132 permettant de faire communiquer les zones situées de part et d'autre du cadre arrière 126. De préférence, le cadre arrière 126 comprend plusieurs ouvertures 132 réparties sur la circonférence.

Ces ouvertures 132 permettent de pouvoir accéder aisément à la zone de jonction entre la motorisation 112 et le conduit intérieur 116 et plus particulièrement de pouvoir visser ou dévisser les éléments de liaison assurant la jonction entre ces deux éléments.

Dans certains cas, comme illustré sur la figure 6, chaque ouverture 132 comprend au moins une porte ou une trappe 134 articulée par rapport au bord de l'ouverture, ladite porte ou trappe 134 étant susceptible d'occuper un premier état dans lequel elle obture l'ouverture 132 et un autre dans lequel elle la dégage. Cet agencement permet de pouvoir accéder aisément à la zone de jonction entre la motorisation 112 et le conduit intérieur 116, et plus particulièrement de pouvoir visser ou dévisser les éléments de liaison assurant la jonction entre ces deux éléments, tout en isolant les deux zones séparées par le cadre arrière 126 en dehors des phases de maintenance.

## Revendications

1. Nacelle d'aéronef comprenant d'une part une lèvre (114) dont la surface en contact avec les flux aérodynamiques est prolongée à l'intérieur de la nacelle par une paroi intérieure (116) délimitant un conduit intérieur relié au niveau d'une zone de jonction (120) à un conduit d'une motorisation (112), ladite surface de la lèvre (114) étant prolongée à l'extérieur de la nacelle par une paroi extérieure (118), et d'autre part, un premier cadre dit cadre avant (122) reliant la paroi intérieure (116) et la paroi extérieure (118) délimitant avec la lèvre (114) un conduit annulaire (124) et un second cadre dit cadre arrière (126) reliant la paroi extérieure (118) et la paroi intérieure (116) au niveau de la zone de jonction (120) entre le conduit intérieur et le conduit de la motorisation (112), pour une section donnée de la nacelle selon un plan contenant l'axe longitudinal (113) de la nacelle un point A correspondant au point d'intersection entre le cadre arrière (126) et la paroi intérieure (116) et un point B correspondant au point d'intersection entre le cadre arrière (126) et la paroi extérieure (118), **caractérisée en ce que** le point B est décalé vers l'arrière de la nacelle par rapport au point A sur plus de 50% de la périphérie du cadre arrière.

2. Nacelle d'aéronef selon la revendication 1, **caractérisée en ce que** le point B est décalé vers l'arrière sur toute la périphérie du cadre arrière.

3. Nacelle d'aéronef selon la revendication 1 ou 2, **caractérisée en ce que** la droite AB forme un angle compris entre 20 et 45° par rapport à la droite passant par A perpendiculaire à l'axe longitudinal (113).

4. Nacelle d'aéronef selon l'une quelconque des revendications précédentes, **caractérisée en ce que** le cadre arrière (126) comprend au moins une ouverture (132) permettant de faire communiquer les zones situées de part et d'autre du cadre arrière.

5. Nacelle d'aéronef selon la revendication 4, **caractérisée en ce que** chaque ouverture (132) comprend au moins une porte (134) articulée par rapport au bord de l'ouverture, ladite porte (134) étant susceptible d'occuper un premier état dans lequel elle obture l'ouverture et un autre dans lequel elle le dégage.

## Patentansprüche

1. Gondel eines Luftfahrzeugs mit einerseits einem Wulst (114), dessen in Kontakt mit dem aerodynamischen Fluss stehende Oberfläche in das Innere der Gondel durch eine Innenwand (116) verlängert ist, die einen inneren Kanal begrenzt, der im Bereich einer Verbindungsstelle (120) mit dem Kanal (112) einer Motorisierung verbunden ist, wobei die Oberfläche des Wulstes (114) zum Äußeren der Gondel hin durch eine Außenwand (118) verlängert ist, und andererseits mit einem ersten, sogenannten vorderen Rahmen (122), der die Innenwand (116) und die Außenwand (118) verbindet und mit dem Wulst (114) einen ringförmigen Kanal (124) begrenzt, und einem zweiten, sogenannten hinteren Kanal (126), der die Außenwand (118) und die Innenwand (116) im Bereich der Verbindungsstelle (120) zwischen dem inneren Kanal und dem Kanal (112) der Motorisierung verbindet, wobei in einem gegebenen Schnitt durch die Gondel längs einer die Längsachse (113) der Gondel enthaltenen Ebene ein Punkt A dem Schnittpunkt zwischen dem hinteren Rahmen (126) und der Innenwand (116) und ein Punkt B dem Schnittpunkt zwischen dem hinteren Rahmen (126) und der Außenwand (118) entspricht, **dadurch gekennzeichnet, dass** der Punkt B bezüglich dem Punkt A über mehr als 50% des Umfangs des hinteren Rahmens zur Rückseite der Gondel hin versetzt ist.

2. Gondel eines Luftfahrzeugs nach Anspruch 1, **dadurch gekennzeichnet, dass** der Punkt B über den ganzen Umfang des hinteren Rahmens hinweg nach hinten versetzt ist.

3. Gondel eines Luftfahrzeugs nach Anspruch 1 oder 2, **dadurch gekennzeichnet, dass** die Gerade AB einen Winkel zwischen 20 und 45° bezüglich der durch A im rechten Winkel zur Längsachse (113) verlaufenden Gerade einnimmt.

4. Gondel eines Luftfahrzeugs nach einem der vorhergehenden Ansprüche, **dadurch gekennzeichnet, dass** der hintere Rahmen (126) wenigstens eine Öffnung (132) aufweist, die es gestattet, die beidseits des hinteren Rahmens gelegenen Bereiche in Verbindung treten zu lassen.

5. Gondel eines Luftfahrzeugs nach Anspruch 4, **dadurch gekennzeichnet, dass** jede Öffnung (132) wenigstens eine Türe (134) aufweist, die in Bezug auf den Rand der Öffnung gelenkig gelagert ist, wobei die Türe (134) dazu eingerichtet ist, einen ersten Zustand einzunehmen, in dem sie die Öffnung schließt und einen zweiteren, in dem sie diese freigibt.

## Claims

1. Aircraft nacelle that comprises, on the one hand, a lip (114) whose surface that is in contact with the aerodynamic streams is extended inside the nacelle by an inside wall (116) that delimits an inside pipe that is connected at a junction zone (120) to a pipe of a power plant (112), said surface of the lip (114) being extended outside of the nacelle by an outside wall (118), and, on the other hand, a first frame called a front frame (122) that connects the inside wall (116) and the outside wall (118), delimiting an annular pipe (124) with the lip (114), and a second frame called a rear frame (126) that connects the outside wall (118) and the inside wall (116) at the junction zone (120) between the inside pipe and the pipe of the power plant (112), for a given cross-section of the nacelle along a plane that contains the longitudinal axis (113) of the nacelle, a point A corresponding to the point of intersection between the rear frame (126) and the inside wall (116), and a point B corresponding to the point of intersection between the rear frame (126) and the outside wall (118), **characterized in that** the point B is offset toward the rear of the nacelle relative to the point A over more than 50% of the periphery of the rear frame.

2. Aircraft nacelle according to Claim 1, wherein the point B is offset toward the rear over the entire periphery of the rear frame.

3. Aircraft nacelle according to Claim 1 or 2, wherein the straight line AB forms an angle of between 20 and 45° relative to the straight line that passes through A perpendicular to the longitudinal axis (113).

4. Aircraft nacelle according to any of the preceding claims, wherein the rear frame (126) comprises at least one opening (132) that makes it possible to link the zones that are located on either side of the rear frame.

5. Aircraft nacelle according to Claim 4, wherein each opening (132) comprises at least one door (134) that is articulated relative to the edge of the opening, whereby said door (134) is able to occupy a first state in which it blocks the opening and another state in which it clears it.
